# EUROPÄISCHE PATENTSCHRIFT

(11) **EP 0 596 231 B1**
(45) Veröffentlichungstag und Bekanntmachung des Hinweises auf die Patenterteilung: **21.05.1997**
(21) Anmeldenummer: 93115243.3
(22) Anmeldetag: 22.09.1993
(51) Int. Cl.: G01N 21/85, G01N 21/53

(54) **Verfahren und Vorrichtung zur Trübungsmessung bei wässrigen Medien**
Method and device for turbidity measurement in aqueous media
Méthode et appareil pour mesurer la turbidité en milieu aqueux

(30) Priorität: 02.10.1992 DE 4233220
(43) Veröffentlichungstag der Anmeldung: 11.05.1994
(73) Patentinhaber: ENDRESS + HAUSER CONDUCTA GESELLSCHAFT FÜR MESS UND REGELTECHNIK mbH & Co., D-70839 Gerlingen (DE)
(72) Erfinder: Seefeld, Peter, Dipl.-Chem, D-74206 Bad Wimpfen (DE)
(74) Vertreter: Otte, Peter, Dipl.-Ing.

(56) Entgegenhaltungen:
- EP-A- 0 017 007
- US-A- 3 714 444

## Beschreibung

### Stand der Technik

Die Erfindung geht aus von einem Verfahren und einer Vorrichtung zur Trübungsmessung bei wässrigen Meßmedien nach dem Oberbegriff des Anspruchs 1, wobei sich die Erfindung allgemein auf die Erfassung von ein Primärsignal durch ihre Anwesenheit entsprechend verändernden Einflußgrößen in der analytischen Chemie bezieht.

Im folgenden wird speziell auf die erwähnte Trübungsmessung bei wässrigen Meßmedien eingegangen, da dies das bevorzugte Anwendungsgebiet auch vorliegender Erfindung ist, wobei es sich aber versteht, daß das erfindungsgemäße Grundprinzip auch bei anderen optischen Meßverfahren in der analytischen Chemie eingesetzt werden kann, bei denen sich durch den Einfluß des Meßmediums erfaßbare Parameterveränderungen ergeben, insbesondere wenn eine besonders hohe Dynamik in der Meßwerterfassung angestrebt wird.

Trübung entsteht in Flüssigkeiten durch die Anwesenheit ungelöster Stoffe, wobei die durch diese feindispersen Stoffe erzeugte Trübung entweder durch die Schwächung der Intensität einer durch die Flüssigkeit durchgehenden Strahlung oder der Intensität des gestreuten Lichts gemessen werden kann. Die Streuung der Strahlung ist eine Eigenschaft von Flüssigkeiten und läßt sich daher zur Messung der Trübung anwenden, wobei hier allgemein zur Definition der physikalischen und chemischen Kenngrößen auf DIN 38404, Teil 2, Oktober 1990 verwiesen werden kann.

So ist es bekannt, mittels eines optischen Trübungsmeßgeräts die beispielsweise bei Wasser mit geringer Trübung (Trinkwasser) gestreute Strahlung zu messen, indem die von einem optischen Lichtsender ausgehende, beispielsweise durch sinuswellenförmige Speisung erzeugte Strahlung von einem optischen Empfänger (beispielsweise Fotodiode) erfaßt und, gegebenenfalls nach Verstärkung, in ein auswertbares Signal umgewandelt wird.

Problematisch ist hierbei allerdings die relativ geringe Dynamik, also Empfindlichkeit eines solchen Meßverfahrens, denn gerade dann, wenn auf die Messung der gestreuten Strahlung abgestellt wird, ist eine Positionierung von optischem Sender und optischem Empfänger im Winkel von 90° zueinander zubeachten, so daß, auch aufgrund weiterer Einflußgrößen, gerade im Bereich minimaler Streueffizienzpunkte gemessen werden muß,und daher die Meßwerterfassung besonders empfindlich ausgebildet sein sollte.

Der Erfindung liegt somit die Aufgabe zugrunde, bei einem Verfahren und einer Vorrichtung zur Erfassung von sich verändernden Einflußgrößen in der analytischen Chemie, insbesondere zur Trübungsmessung mit gestreuter Strahlung eine hohe Meßdynamik bei ausgezeichneter Empfindlichkeit sicherzustellen.

In diesem Zusammenhang ist es bekannt, als optischen Sender und optischen Empfänger Dioden einzusetzen, also eine Leuchtdiode zur Erzeugung eines in einem geeigneten Frequenzbereich (beispielsweise 880 nm) liegenden Infrarotlicht sowie als Empfängerdiode eine Fotodiode einzusetzen. Die Einkopplung und Auskopplung kann dabei mittels zylindrischer Glasprismen erfolgen, die die Sende- und Empfangsdiode enthalten, wobei die Glasprismen in eine Endplatte an einem zylindrischen Sensorkörper eingebettet sind, die den Sensorkörper selbst senkrecht abschließen. Um daher bei der Streulichtmessung zu einem angestrebten 90°-Winkel zwischen Sende- und Empfangsstrahl zu gelangen, sind die die Sende- und Empfangsdiode enthaltenden Glasprismen in der Endplatte des Sensorkörpers schräg zueinander angeordnet, in einer Winkelstellung, die die Brechung im Meßmedium berücksichtigt.

Üblicherweise wird dabei so vorgegangen, daß getaktete IR-LED's bei 880 nm verwendet werden und als Empfängerdioden Silicium-Fotodioden mit Tageslichtsperrfiltern eingesetzt sind. Die Übertragung der Wechsellichtamplituden vom Sensor zum Transmitter erfolgt mit nachfolgender Gleichrichtung und einkanaliger Bewertung im Transmitter. Durch die Taktung läßt sich im Empfindlichkeitsbereich der Empfängerdioden mit Tageslicht-Sperrfiltern Gleichlicht (beispielsweise Tageslicht) eliminieren.

### Vorteile der Erfindung

Die Erfindung löst die weiter vorn genannte Aufgabe mit den Merkmalen des Anspruchs 1 bzw. des Anspruchs 8 und hat den Vorteil, daß sich eine besonders hohe Meßdynamik und eine ausgezeichnete Empfindlichkeit aufgrund der Meßwertverarbeitung ergibt, was ein breites Einsatzspektrum mit einem Sensor ermöglicht.

So können nach den Grundprinzipien vorliegender Erfindung aufgebaute Sensoren für die Abwasseraufbereitung, für Kläranlagen-Auslauf, Trinkwasseraufbereitung, in Fällungsprozessen, bei der Filtratüberwachung, bei der Gewässerkontrolle oder Einleiterkontrolle Abwasserabgabe eingesetzt werden, um nur einige Möglichkeiten zu nennen.

Ein weiterer Vorteil besteht darin, daß sich bei praktisch jeglichen Anwendungsfällen, auch on-line Anwendungen in bewegtem Meßmedium ein gesicherter Meßwert ergibt, und zwar durch Prüfung des Meßsignals auf Plausibilität und Luftblasenunterdrückung.

Hinzu kommt ein Schutz vor Fehlmessungen, der sich durch Selbstüberwachung und Sensordiagnose ergibt.

Dabei versteht es sich, daß die spezielle Meßwertaufbereitung, die durch die vorliegende Erfindung gewährleistet ist, nicht nur bei dem hier speziell und im nachfolgenden auch im einzelnen erläuterten 90°-Streulichtmeßverfahren eingesetzt werden kann, sondern sich zur Anwendung bei unterschiedlichsten Trübungsmeßverfahren eignet, also beispielsweise auch 180° Rückstreuung, Mehr-Strahl-Wechsellicht u.dgl.

Weitere Ausgestaltungen der Erfindung sind Gegenstand der Unteransprüche und in diesen niedergelegt. Hierbei ist besonders vorteilhaft die schräge Ausbildung des Sensorkopfes, wobei die Sendediode und Empfangsdiode aufnehmende Prismen angrenzend zueinander in einer gemeinsamen Ebene liegen, die senkrecht zur Längsachse der durch den Schräganschnitt des zylindrischen Sensorrohrs entstandenen Ellipse verläuft.

In weiterer Ausgestaltung sind die zylindrischen Prismen mit Sende- und Empfangsdiode auf der einander zugewandten Seite seitlich abgeflacht, d.h. eine Seite des Zylinders ist angeschliffen, so daß die Zentren höherer Strahlungsdichte der Prismen näher zusammenliegen.

Eine weitere besonders vorteilhafte Ausgestaltung besteht schließlich noch darin, daß der Sensor selbst eine eigene Vor-Ort-Elektronik aufweist, so daß eine Sensorauswertung vor Ort bei hoher Störungsunempfindlichkeit möglich ist.

### Zeichnung

Ausführungsbeispiele der Erfindung sind in der Zeichnung dargestellt und werden in der nachfolgenden Beschreibung näher erläutert. Es zeigen:
- Fig. 1: stark schematisiert in einer Ansicht schräg von unten eine bevorzugte Ausführungsform eines Sensors mit schräger Bodenplatte, in welcher z.B. Sende- und Empfangsdioden für die Trübungsmessung in eigenen Glasprismen eingebettet sein können;
- Fig. 2: ebenfalls stark schematisiert in einer Seitenansicht eine mögliche Einbauform des Sensorteils mit Einbauarmatur in einem im Querschnitt dargestellten Rohr;
- Fig. 3: eine der Darstellung der Fig. 2 vergleichbare Einbauposition des Sensors, in Längsrichtung des Rohres gesehen, so daß die mit Empfangs- und Sendeprisma in das Meßmedium eintauchende schräge Sensorfläche in Draufsicht zu erkennen ist, wobei in
- Fig. 4: eine vergrößerte Darstellung lediglich der Sende- und Empfangsdiode tragenden Glasprismen in ihrer auch im Sensor erhaltenen relativen Positionierung zueinander gezeigt sind;
- Fig. 5: zeigt schematisiert und überwiegend in Blockschaltbilddarstellung eine mögliche Ausführungsform für die Weiterverarbeitung der von der Empfangsdiode gelieferten Ausgangssignale, bevorzugt noch im Sensorbereich;
- Fig. 6: zeigt anhand eines Signal/Zeitdiagramms verschiedene Signalverläufe in zeitlicher Abfolge und
- Fig. 7: zeigt in vereinfachter Flußbilddarstellung die Auswertung der vom Sensor gelieferten Meßwerte in einer bevorzugt zum Sensor getrennt angeordneten Auswerteeinheit, wobei bevorzugt Kleinrechner oder Mikroprozessoren zur Auswertung und Plausibilitätskontrolle eingesetzt sind - diese Figur setzt sich aus zwei Teilfiguren 7a und 7b auf jeweils getrennten Blättern zusammen, wobei Oberleitungen a-a bzw.
b-b auftreten.
Beschreibung der Ausführungsbeispiele Der Grundgedanke vorliegender Erfindung besteht darin, mindestens die von einer Empfangsdiode gelieferten, sich auf den Trüburgszustand eines Meßmediums beziehen Meßwerte in unterschiedlichen Verstärkungsstufen weiterzuverarbeiten und seriell zu übertragen, so daß sich nach phasensynchroner Gleichrichtung kurze analoge Impulse am Sensorausgang ergeben, die am Ausgang seriell anstehen und zur Gewinnung einer hochempfindlichen Meßwertaussage über den Trübungsgrad des Meßmediums verarbeitet, nämlich digitalisiert werden.

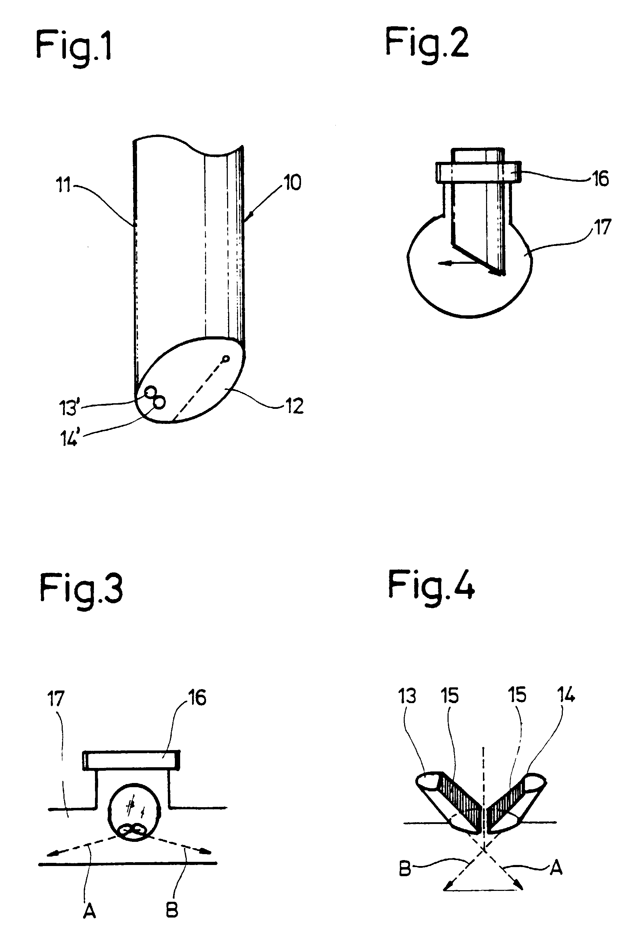

In Fig. 1 ist ein Meßsensor mit 10 bezeichnet; er besteht üblicherweise aus einem runden, also zylindrischen Schaft 11, der von einer schräg zur Schaftachse verlaufenden Boden- oder Endplatte 12 abgeschlossen ist. Diese auf den Sensorkörper angesetzte Endplatte 12 nimmt die optischen Sende- und Empfänger-Prismenfenster auf bzw. bildet sie, die in Fig. 1 mit 13' für das Sendeprisma und mit 14' für das Empfängerprisma bezeichnet sind.

Wie schon vorhergehend erwähnt, werden zur optischen Detektion von Trübstoffgehalten in wässrigen Medien bevorzugt im Infrarotbereich arbeitende Leuchtdioden (LED) und Empfangsdioden (Fotodioden) eingesetzt, die in den erwähnten Sende- und Empfängerprismen 13 und 14 (vergleiche Fig. 4) so angeordnet sind, daß die Prismen die Aufgabe von Strahlleitanordnungen übernehmen.

In einer Ausgestaltung sind anstelle üblicher runder Prismen zylindrische Prismen mit seitlicher Abflachung, wie bei 15 erkennbar, für Sende- und Empfangsprisma 13, 14 vorgesehen, wobei die Prismen so angeschliffen sind, daß sie mit ihren abgeflachten Seiten, wie in Fig. 4 gezeigt, gegeneinander angeordnet werden können. Hierdurch ist es möglich, die Zentren höherer Strahlungsdichte näher zusammenzubringen, was erhebliche Vorteile hinsichtlich der Meßeigenschaften hat.

Tatsächlich werden nämlich, bedingt durch diese Prismengestalt selbst reduzierte effektive optische Weglängen, die sich beim Vorliegen von hohen Trübstoffgehalten einstellen, anteilig besser mit der Anregungs- und Detektions-Apertur erfaßt, wobei gleichzeitig die erzielten Strahlungsdichteverteilungen bei mittleren (40 bis 1000 FTE) und bei niedrigeren (0 bis 40 FTE) Trübungsgehalten besonders geeignete Ausleuchtungseffekte im Aperturbereich gewährleisten, die noch zu einer deutlichen Detektion selbst von Spurentrübungen (0 ... 0,2 FTE) geeignet sind.

Erkennbar sind Sende- und Empfangsprisma 13, 14 im Sensorkörper in einem, wie aus Fig. 4 erkennbar, Winkel zueinander, also sich sozusagen schräg nach hinten öffnend, angeordnet, wobei dieser Winkel so zu bemessen ist, daß sich unter Einbeziehung üblicher Brechungsverhältnisse im wässrigen Meßmedium die Sende-Strahlrichtung A und die Empfangs-Strahlrichtung B in einem Winkel von etwa 90° treffen, wie speziell bei den hier erläuterten Trübungsmessungen angestrebt.

Die Fig. 2 und 3 zeigen eine mögliche Anwendung eines solchen, über eine schräge Endplatte 12 verfügenden Sensorkörpers mit bei 16 angedeuteter Einbauapparatur, wobei der Sensor 10 mit seiner Endplatte 12 in ein das Meßmedium führende Rohr 17 eintaucht.

Bei diesem Ausführungsbeispiel sei angenommen, daß die Strömungsgeschwindigkeit im Rohr vergleichsweise gering ist, da eine Einbauposition gezeigt ist, bei welcher die schräge Endplatte 12 parallel zur Rohrlängsachse liegt, was insofern vorteilhaft ist, als sich hierdurch mittels eines einfachen T-Stücks als Einbauarmatur eine wirksame Lichtfallen-Konstellation ergibt, da schon die Rohrleitung als Lichtfalle für den Sendestrahl A wirkt, nachdem dieser relativ nah angrenzend an die Prismenfenster 13', 14' im Sensor die Empfangs-Strahlrichtung gekreuzt hat. Ein solcher Einbau vermeidet daher störende Reflexion, wobei ferner durch die angewinkelte Endplatte sich auch Vorteile hinsichtlich aufkommender Luftblasen ergeben, die ohne ein sonst notwendiges Anwinkeln des gesamten Sensorkörpers abperlen können.

Soweit zum mechanischen Grundaufbau,der ergänzend zu der im folgenden zu beschreibenden Meßwertaufbereitung und -auswertung in wirksamer Weise zur Gewinnung einwandfreier Meßwerte beiträgt.

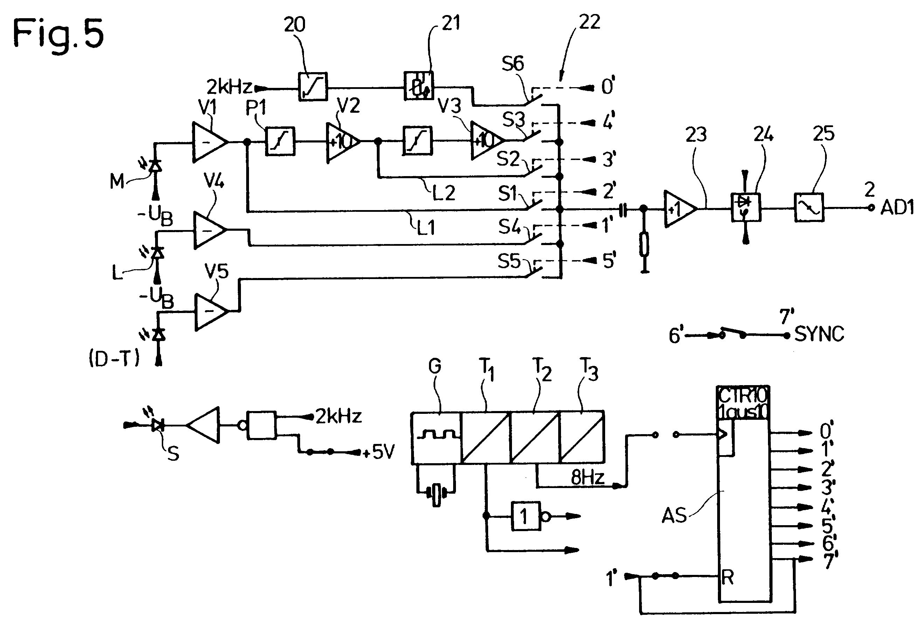

Tatsächlich sind entsprechend der Darstellung der Fig. 5 im Sensorkörper noch einige weitere Meßelemente und weiterführende Verarbeitungsschaltungen angeordnet, nämlich ein vorzugsweise durch einen Quarz frequenzstabilisierter Oszillator G, dem Frequenzteilerstufen T1, T2, T3 nachgeschaltet sind, sowie diverse Verstärker und Impulsformerstufen.

Dabei ergibt sich folgendes. Über eine erste symmetrische Impulsverstärker- bzw. Formerstufe 20 gelangt ein 2 kHZ-Signal zu einem Temperatursensor 21 innerhalb des Sensorkörpers, so daß in die Messung auch ein Temperatursignal einbezogen werden kann, welches in zeitlich abgestufter Reihenfolge, also seriell auf einen Ausgang AD1 am Sensor über einen Schalterblock 22 aufgeschaltet wird.

Zusätzlich zu der Meß- bzw. Empfangsdiode M ist innerhalb des Sensorblocks und bevorzugt so angrenzend zur Sende-LED 13 noch eine sogenannte Leistungsüberwachungsdiode L vorgesehen, die dazu dient, die ebenfalls mit einem 2 kHZ-Signal versorgte Sendediode in der von ihr abgegebenen Leistung zu überwachen. Daher wird das Ausgangssignal der Leistungsdiode bei der endgültigen Meßwertaufbereitung und -verwertung mit einbezogen.

Schließlich ist in der Schaltung der Fig. 5 noch eine weitere Empfangsdiode D-T vorgesehen, die allgemeinen Übertragungszwecken dienen kann und in der nachfolgenden Beschreibung einen nicht belegten Kanal charakterisiert, auf den im folgenden auch nicht weiter eingegangen wird.

Sämtlichen Empfangsdioden sind Verstärker nachgeschaltet, wobei die Ausgangssignale sämtlicher Dioden mit dem hier bevorzugten 2 kHZ-Speisesignal für die Sendediode 13 pulsen. Daher ist auch am Ausgang des Schalterblocks 22, auf den weiter unten noch eingegangen wird, in der gemeinsamen Ausgangsleitung 23 noch ein phasensynchroner Gleichrichter 24 angeordnet, der dafür sorgt, daß die als Rechteckimpulse von den einzelnen Empfangsdioden über deren Verstärker eingehenden Signale durch Gleichrichtung in durch die Umschaltung am Schalterblock in ihrer Länge bestimmte kurze analoge Impulse umgewandelt werden.

Dem phasensynchronen Gleichrichter 24 ist schließlich noch ein Filter 25 nachgeschaltet.

Von wesentlicher Bedeutung ist, daß das von der Empfangsdiode M gelieferte Ausgangssignal über drei Verstärkerstufen in drei in ihrer Amplitude unterschiedliche Ausgangssignale umgewandelt wird, wobei ein erster, der Empfangsdiode M unmittelbar nachgeschalteter Verstärker V1 eine niedrige, beispielsweise eine vorgegebene Standardverstärkung aufweist, dessen Ausgang über die Verbindungsleitung L1 auf einen Ausgangsschalter S1 im Schalterblock 22 gelangt. Ferner ist an den Ausgang des ersten Meßsignalverstärkers V1 über eine symmetrische Pulsverstärkungsstufe P1 ein weiterer Verstärker V2 mit dem hier zugrundegelegten Verstärkungsgrad 10 angeschlossen, dessen Ausgang über die Ausgangsleitung L2 auf einen Ausgangsschalter S2 im Schalterblock 22 gelangt.

Hieran schließt sich über eine weitere symmetrische Pulsverstärkerstufe P2 schließlich ein dritter Verstärker V3 an mit vorzugsweise dem gleichen Verstärkungsgrad 10, dessen Ausgang dann am Ausgangsschalter S3 liegt. Dementsprechend liegt die weiter vorn schon erwähnte Leistungsdiode zur Überprüfung der von der Sendediode 23 erbrachten Infrarot-Ausgangslichtleistung über einen eigenen Verstärker V4 und einen eigenen Ausgangsschalter S4 an der gemeinsamen Ausgangssammelleitung 23, während der Leerkanal über einen Verstärker V5 und einen Ausgangsschalter S5 angeschlossen ist; das ebenfalls mit f = 2 kHz gechoppte Ausgangssignal des Temperatursensors 21 liegt schließlich über dem Ausgangsschalter S6 an der gemeinsamen Ausgangsleitung im Schalterblock 22.

Die Ansteuerung der einzelnen Ausgangsschalter im Steuerblock 22 erfolgt über eine geeignete Auswahl-Ansteuerschaltung AS, die bei dem dargestellten Ausführungsbeispiel von einem geeigneten Eingangsfrequenzsignal vom Frequenzteiler T2 angesteuert ist, hier mit 8 Hz, was allerdings lediglich zum besseren Verständnis der Erfindung angegeben wird und dies, wie es sich versteht,diese nicht einschränkt.

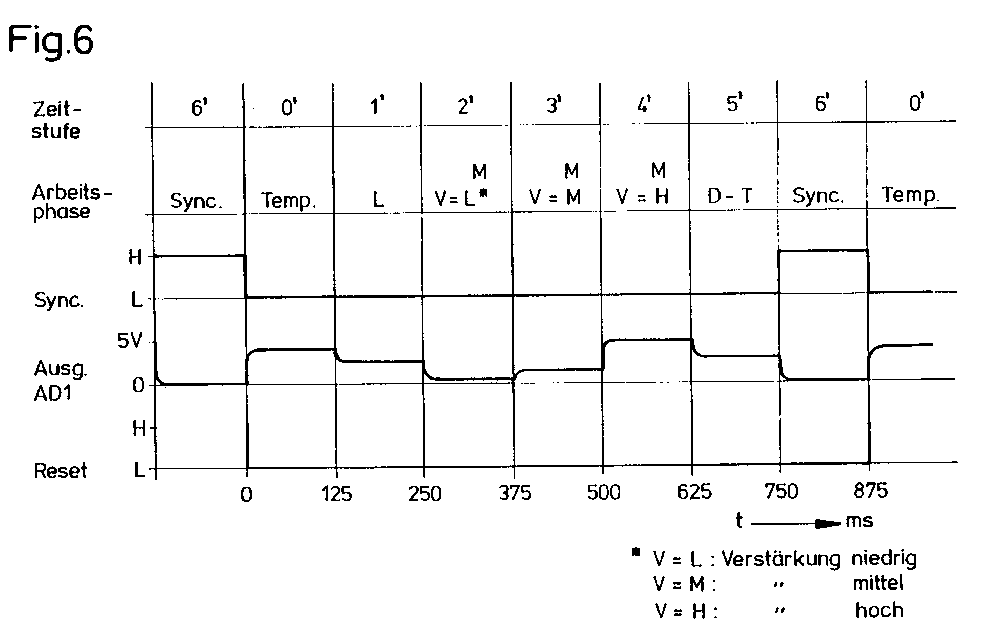

Erkennbar werden daher in der Abfolge der von der Ansteuerschaltung AS herausgegebenen Impulse zu den gangsschaltern S1 bis S6 die verschiedenen Ausgangsschalter seriell aufeinanderfolgend geschlossen und wieder geöffnet, so daß sich am Ausgangsanschluß AD1 in zeitlicher Abfolge, also seriell, unterschiedliche Signale ergeben, wie am besten der Darstellung der Fig. 6 entnommen werden kann.

Die Fig. 6 zeigt als Impulszeitdiagramm einen vollständigen Schaltzyklus der gemultiplexten Ausgangsschalter, wobei als erstes, also in der Zeitstufe 6 ein Synchronisierimpuls Sync erzeugt wird, der dem Ausgangsimpuls 6' der Auswahl-Ansteuerschaltung AS entspricht. Auf der Ausgangsleitung 23 schließt sich dann bei geschlossenem Ausgangsschalter S6 über das 0'-Zeitsteuersignal der Ansteuerschaltung AS das Temperatursignal an, welches im Diagramm der Fig. 6 als kurzer Analogimpuls dargestellt ist mit einer Dauer von jeweils 125 ms, wie für alle anderen Signale auch, da die Ansteuerung im 8 Hz-Rhythmus erfolgt.

Anschließend gelangt auf den Ausgang AD1 das Leistungssignal der Leistungssignaldiode L bei geschlossenem Ausgangsschalter S4. Daraufhin werden dann in serieller Abfolge die aus dem Ausgangssignal der Empfangsdiode M gewonnene Signale übertragen, bei niedriger, mittlerer und hoher Verstärkung (V = L (low); V = M (medium) sowie V = H (high)). In der Zeitstufe 5' schließt sich dann noch das den freien Kanal D-T charakterisierende Signal an, welches bei vorliegender Erläuterung bedeutungslos ist. Es ergeht dann ein neuer Synchronisierimpuls in der darauffolgenden Zeitstufe 6', während welcher Zeitdauer der Ausgang AD1 Nullpotential führt. Anschließend wiederholt sich der Zyklus mit dem Temperatursignal.

Die Übertragung des Ausgangssignals der Empfangsdiode M in bei dem vorliegenden Ausführungsbeispiel drei unterschiedlichen Verstärkungsstufen als serielle analoge Kurzimpulse hat folgende Bewandtnis. Ein nachgeschaltetes Meßwertauswertegerät verwendet als Meßwertverarbeitungseinrichtung bevorzugt einen Mikroprozessor, der die in zeitlicher Abfolge eingehenden Analogpulse digitalisiert, so daß diese dann in einer gut weiterzuverarbeitenden Form zur Verfügung stehen.

Es sei angenommen, daß für die Digitalisierung beispielsweise 4095 Intensitätsstufen zur Verfügung stehen, um beispielsweise einen analogen Signalimpuls in seiner Amplitude zwischen 0 bis 5 V (lediglich als quantitative Beispielangabe) zu bestimmen.

Bei einem sich im mV-Bereich bewegenden Ausgangssignal gelingt es aber bei einkanaliger Übertragung nicht, hier eine hinreichend feinauflösende Digitalisierung überhaupt vorzunehmen, wie ohne weiteres einzusehen, so daß es sinnvoller ist, beispielsweise ein nur 10 mV betragendes analoges Impulssignal um den Faktor 100 zu verstärken, was dann einem gut digitalisierbaren Wert von 1 V entsprechen würde, so daß sich hier bei der Digitalisierung in etwa doch ca. 1700 Intensitätsabstufungen bzw. Bit ergeben würden.

Entsprechend führt eine um den Faktor 10 geringere und insofern mittlere Verstärkung zu lediglich 170 Intensitätsstufen, während, wie erwähnt, bei dem ursprünglichen 10 mV-Signal nur etwa 17 Bit zur Verfügung stehen würden, was zu erheblichen Ungenauigkeiten führt.

Dadurch also, daß der nachfolgende Mikroprozessor seriell unterschiedliche Verstärkungsgrade des gleichen Signals zugeführt erhält, kann neben der wesentlich besseren Auflösung (ergibt sich nämlich bei einer einkanaligen Übertragung eine Dynamik von lediglich 1 : 4095, wenn man bei dem erläuterten Beispiel bleibt, dann läßt sich bei dreikanaliger Übertragung eine Dynamik von 1 : 4095 x 100 realisieren), so ist der nachgeschaltete Rechner oder Mikroprozessor ferner noch in der Lage, einen Plausibilitätstest bezüglich der ihm zugeführten Meßsignale durchzuführen, da diese ja unter Einbeziehung ihrer unterschiedlichen Verstärkungsgrade innerhalb bestimmter Bereiche liegen müssen.

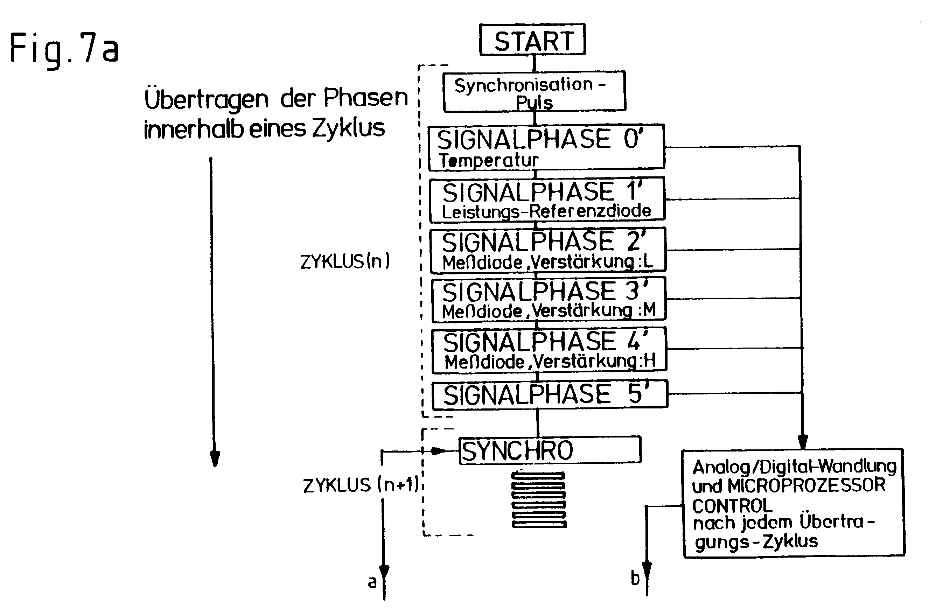

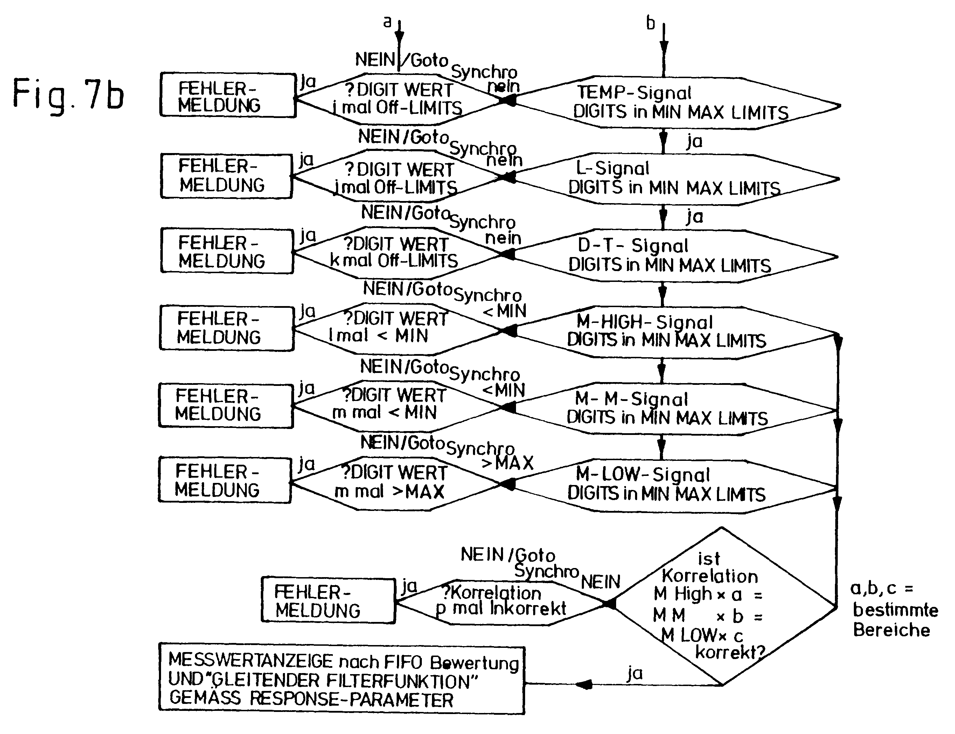

Einen möglichen Funktionsablauf der Meßwertauswerteschaltung, also des vorgesehenen Mikroprozessors ist in Form eines Flußdiagramms in Fig. 7 als Beispiel dargestellt, wobei dem Mikroprozessor das am Ausgang AD1 jeweils zeitsynchron anliegende Signal in Form der aus dem Diagramm der Fig. 6 ersichtlichen niederfrequenten analogen Signalimpulse zugeführt ist. Da das Flußdiagramm der Fig. 7 durch die Blockbildbeschriftung für sich selbst spricht und daher für den Fachmann ohne weiteres in seinem Funktionsablauf interpretierbar ist, kann von einer weiteren Erläuterung hier abgesehen werden; nach dem Startblock ergibt sich jedenfalls nach Empfang des Synchronisationsimpulses die erste Signalphase im Sinne der Zeitstufe 0' des Diagramms der Fig. 6; es schließen sich dann im zeitlichen seriellen Ablauf die Signalphase 1' für das Meßsignal der Leistungsreferenzdiode L an; anschließend kommen die Signalphasen 2', 3' und 4' für das Empfangs- oder Meßdiodenausgangssignal mit den unterschiedlichen Verstärungsgraden und anschließend noch die Leerkanal-Signalphase 5'.

Nach Analog-Digitalwandlung werden die in den jeweiligen Signalphasen übertragenen Werte auf jeweils zulässige maximale und minimale Grenzwerte überprüft, wobei ein nachgeschalteter Korrelationsblock mit Bezug auf die aus unterschiedlichen Verstärkungsstufen resultierenden Empfangsdioden-Ausgangssignalen noch eine Plausibilitätsprüfung durchführt.

Aus dem Flußdiagramm der Fig. 7 erkennt man auch, daß bei Überschreiten vorgegebener minimaler oder maximaler Grenzwerte Fehlermeldungen nur dann ergehen, wenn sich signifikant außerhalb vorgegebener Rahmenbedingungen fallende Werte ergeben; ansonsten kehrt die Meßwertverarbeitung zum Synchronisationspulsblock zurück, so daß ein nächster Meßwertverarbeitungszyklus n + 1 durchgeführt wird.

Das Flußdiagramm der Fig. 7 läßt auch erkennen, daß eine "First-In"-, "First-Out"-Filterfunktion mit Bewertung von M Minimalwerten aus n+m-Werten innerhalb dieser "FiFo"-Zeitspanne realisiert wird, was die Eliminierung unplausibler, plötzlich auftretender Störspitzen ermöglicht. Dabei kann ein FiFo beispielsweise n+m (= 5 Zyklen während 5 x 825 ms = 4125 sec) umfassen.

Die jeweils n = 3 kleinsten (Minimalwerte) dienen der Bewertung, die m = 2 höchsten (Maximalwerte) werden verworfen.

In der gleichen Weise können real gemessene, sich rasch aufbauende Reflexionssignale, auch durch störende Luftblasen im Sensorstrahlengang verursacht, eliminiert werden.

Insofern ergeben sich gute Filtermöglichkeiten bei der Übertragung der niederfrequenten analogen Signalimpulse (Dauer bei dem dargestellten Ausführungsbeispiel jeweils 125 msec) schon bei der analogen seriellen Signalübertragung. Tatsächlich läßt sich gerade durch die zeitliche Verarbeitung von unterschiedlich verstärkten Meßdioden-Ausgangssignalen zuverlässig feststellen, ob eines oder mehrere dieser Ausgangssignale außerhalb der zu erwartenden Grenzwerte fallen, wobei auch Beobachtungen über mehrere Zyklen vorgenommen werden können, unter Einbeziehung der Veränderungsmöglichkeiten in der Signalamplitude, die sich durch tatsächliche Trübungsänderungen maximal ergeben können. Man erzielt auf diese Weise bei hoher Empfindlichkeit und bester Meßgenauigkeit eine entscheidende Unempfindlichkeit gegen sogenannte Bursts, energiereiche Transienten und eventuell auftretende HF-Einstrahlungen.

## Patentansprüche

1. Verfahren zur Erfassung von ein Primärsignal durch ihre Anwesenheit entsprechend verändernden Einflußgrößen in der analytischen Chemie, insbesondere zur Trübungsmessung in wässrigen Meßmedien, mit einem optischen Sender und einem zugeordneten Empfänger, der ein durch den Einfluß des Meßmediums verändertes Ausgangssignal zur Auswertung erzeugt, dadurch gekennzeichnet, daß das Ausgangssignal des optischen Empfängers (14; M) unterschiedlichen Verstärkungsgraden unterworfen wird, welche separat einer logischen Auswerteschaltung zugeführt werden, die nach Bewertung der Signalabstufungen eine Meßwertanzeige durchführt.

2. Verfahren nach Anspruch 1, dadurch gekennzeichnet, daß die aus unterschiedlichen Verstärkungsstufen resultierenden Ausgangssignale der gleichen Empfangsdiode (14, M) seriell aufeinanderfolgend der als Mikroprozessor ausgebildeten logischen Auswerteschaltung zugeführt werden, die die unterschiedlichen Signalstufen auf Plausibilität überprüft und aus den zugeführten Signalen dasjenige zur Meßwertanzeige auswählt, welches aufgrund seiner Signalhöhe eine optimale Digitalisierung gestattet.

3. Verfahren nach Anspruch 1 oder 2, dadurch gekennzeichnet, daß die unterschiedlich abgestuften Empfangsdioden-Ausgangssignale zusammen mit einem Temperatursignal und mindestens einem weiteren Diodenausgangssignal über einen zeitlich gemultiplexten Schalterblock (22) der einen gemeinsamen Ausgangsleitung zugeführt werden, wobei der Schalterblock von einer Auswahl-Ansteuerschaltung (AS) angesteuert wird.

4. Verfahren nach einem der Ansprüche 1 bis 3, dadurch gekennzeichnet, daß die Sendeleuchtdiode (13) von einem Wechselsignal angesteuert wird und die entsprechend gepulsten Meßdioden-Ausgangssignale durch einen in der gemeinsamen Ausgangsleitung (23) zur Weiterverarbeitung angeordneten phasensynchronen Gleichrichter (24) in serielle niederfrequente analoge Signalimpulse umgewandelt werden.

5. Verfahren nach einem der Ansprüche 1 bis 4, dadurch gekennzeichnet, daß im Bereich des Sensorkopfes ein Temperatursensor (21) angeordnet ist, dem ebenfalls ein höherfrequentes Ansteuersignal zugeführt ist und dessen Ausgang ebenfalls über den gemultiplexten Schalterblock (22) in serieller Abfolge mit den anderen Meßsignalen auf die gemeinsame Ausgangsleitung (23) gelegt wird.

6. Verfahren nach einem der Ansprüche 1 bis 5, dadurch gekennzeichnet, daß die unterschiedlichen Verstärkungsgrade des Empfangsdioden-Ausgangssignals von der separat zum Sensorkörper mit seiner Vor-Ort-Elektronik angeordneten Meßwertauswerteschaltung auf Einhaltung vorgegebener minimaler und maximaler Grenzwerte überprüft werden.

7. Verfahren nach einem oder mehreren der Ansprüche 1 bis 6, dadurch gekennzeichnet, daß mindestens das Temperatursignal, das Leistungsüberprüfungssignal sowie drei mit normaler, mittlerer und hoher Verstärkung gewonnene Empfangsdioden-Ausgangssignale zur Trübungsmessung nach Überprüfung auf Grenzwertüberschreitung einer weiteren, jeweils separaten Überprüfung auf außerhalb möglicher Meßwertgrenzen liegender Werte unterworfen wird, wobei je nach Ergebnis der Überprüfung entweder ein erneuter Meßzyklus durchgeführt wird oder eine Fehlermeldung ergeht.

8. Vorrichtung zur Erfassung von ein Primärsignal durch ihre Anwesenheit entsprechend verändernden Einflußgrößen in der analytischen Chemie, insbesondere zur Trübungsmessung bei wässrigen Meßmedien, mit einem optischen Sender und einem zugeordneten Empfänger der ein durch den Einfluß des Meßmediums verändertes Ausgangssignal zur Auswertung erzeugt, zur Durchführung des Verfahrens nach einem oder mehreren der Ansprüche 1 bis 7, dadurch gekennzeichnet, daß der Ausgang des lichtoptischen Empfängers (M; 14) parallel oder aufeinanderfolgend Verstärkern (V1, V2, V3) zugeführt ist, derart, daß sich aus dem einen Empfangsdioden-Ausgangssignal in der Amplitude unterschiedlich abgestufte Parallelsignale ergeben, die einer seriellen Verarbeitung zugeführt sind.

9. Vorrichtung nach Anspruch 8, dadurch gekennzeichnet, daß in einem durch eine schräge Endplatte (12) abgeschlossenen Sensorkörper neben den in eigenen optischen strahlleitenden Anordnungen (13, 14), die den Sender als LED (S) sowie den Empfängerals Foto- diode (M) enthalten, eine Vor-Ort-Elektronik angeordnet ist, die für jeweils vorhandene Empfängerdioden (M, L) mindestens einen im zeitlichen Ablauf gemultiplexten Schalterblock (22) enthält, zur seriellen Aufleitung der Ausgangssignale der Empfängerdioden auf eine gemeinsame Ausgangsleitung (23) zur Auswertung.

10. Vorrichtung nach Anspruch 8 oder 9, dadurch gekennzeichnet, daß der Schalterblock (22) zur seriellen Aufleitung von Empfängerdioden-Ausgangssignalen aus unterschiedlichen Ausgangsschaltern (S1, S2, S3, S4, S5, S6) besteht, die in zeitlicher Abfolge von einer Auswahl-Ansteuerschaltung (AS) angesteuert sind zur selektiven Weiterleitung jeweils eines der Meßsignale auf die gemeinsame Ausgangsleitung (23) wobei die einzelnen Empfängerdioden von höherfrequentem Licht der mit einer Wechselspannung (Rechteckspannung von 2 kHz) beaufschlagten Senderdiode (S) beaufschlagt sind und dem Schalterblock (22) ein phasensynchroner Gleichrichter (24) nachgeschaltet ist zur Erzeugung von niederfrequenten analogen Signalimpulsen in zeitlicher Abfolge, die über die meinsame Ausgangsleitung (23) einer Meßwertauswerteshaltung zugeführt sind.

11. Vorrichtung nach einem der Ansprüche 8 bis 10, dadurch gekennzeichnet, daß im sensitiven Bereich des Sende- und Empfängerdioden tragenden Sensorkörpers ferner ein Temperatursensor als NTC-Widerstand (21) angeordnet ist, der ebenfalls mit einer höherfrequenten Eingangsspeisespannung beaufschlagt ist und dessen Ausgangssignal nach synchroner Gleichrichtung zusammen mit den Leistungs- und Empfängerdioden-Ausgangssignalen ausgewertet wird.

12. Vorrichtung nach einem der Ansprüche 8 bis 11, dadurch gekennzeichnet, daß Sende- und Empfängerdiode (S, M) in jeweiligen, die ausgehende Strahlung formenden zylindrischen Prismen (13, 14) angeordnet sind, die seitlich abgeflacht sind und mit ihren abgeflachten Seiten im Bereich von Strahleintritt und -austritt in einem Winkel so zusammengestellt sind, daß sich im angrenzenden wässrigen Meßmedium ein zur Trübungsmessung der gestreuten Stahlung geeigneter 90°-Winkel ergibt.

13. Vorrichtung nach einem der Ansprüche 8 bis 12, dadurch gekennzeichnet, daß die Empfänger- und Sendediode (M, S) tragenden Prismen (13, 14) in einer schräg zum zylindrischen Sensorkörper (10) an diesem angesetzte Endplatte (12) aufgenommen sind, so daß hierdurch Sende- und Empfänger-Prismenfenster gebildet sind.

14. Vorrichtung nach Anspruch 13, dadurch gekennzeichnet, daß die beiden Sende- und Empfängerprismenfenster (13', 14') im unteren, sich durch die Schrägform der Endplatte verjüngenden Bereich des zylindrischen Sensorkörpers (10) angeordnet sind, wobei eine durch beide Prismenfenster gelegte Achse senkrecht zur Ellipsenhauptachse der schrägen Endplattenform verläuft, derart, daß bei vertikaler Montage des Sensorkörpers auch in Rohrleitungen diese selbst eine Lichtfalle für den Sendestrahl ohne störende Reflektionen bilden bei gleichzeitigem Stoßschutz durch die tiefer ragende Endplattenkante.

## Claims

1. A method for determining influencing variables in analytical chemistry which accordingly vary a primary signal by their presence, more particularly for measuring turbidity in aqueous test media, comprising an optical transmitter and an associated receiver which generates for evaluation an output signal which is varied by the influence of the test medium, characterised in that the output signal of the optical receiver (14; M) is subjected to different amplification factors which are supplied separately to a logic evaluation circuit which executes measured value indication after evaluating the signal gradations.

2. A method according to claim 1, characterised in that the output signals, which result from different amplification stages, of the same receiving diode (14, M) are supplied sequentially to the logic evaluation circuit which is in the form of a microprocessor and which checks the different signal stages for plausibility and from the signals supplied selects for measured value indication the signal which permits optimum digitalisation on the basis of its signal level.

3. A method according to claim 1 or 2, characterised in that the receiving diode output signals of differing gradations together with a temperature signal and at least one other diode output signal are supplied via a time-multiplexed switch block (22) to the one common output line, the switch block being controlled by a selective control circuit (AS).

4. A method according to one of claims 1 to 3, characterised in that the transmitting light-emitting diode (13) is controlled by an alternating signal and the correspondingly pulsed measurement diode output signals are converted by a phase-synchronous rectifier (24), located in the common output line (23) for further processing, into serial low-frequency analogue signal pulses.

5. A method according to one of claims 1 to 4, characterised in that arranged in the region of the sensor head is a temperature sensor (21) to which a higher frequency control signal is also supplied and whose output is also applied via the multiplexed switch block (22) to the common output line (23) in serial sequence with the other measurement signals.

6. A method according to one of claims 1 to 5, characterised in that the different amplification factors of the receiving diode output signal from the measured value evaluation circuit, which is arranged with its local electronics separately from the sensor body, are checked as to whether they are within predetermined minimum and maximum limit values.

7. A method according to one or more of claims 1 to 6, characterised in that at least the temperature signal, the power checking signal and also three receiving diode output signals which are obtained with normal, medium and high amplification for turbidity measurement, after being checked as to whether they have exceeded limit values, are subjected to respective separate further checks for values lying outside possible measured value limits, whereupon, depending on the result of the check, either a fresh measurement cycle is performed or an error message is given.

8. A device for determining influencing variables in analytical chemistry which accordingly vary a primary signal by their presence, more particularly for measuring turbidity in aqueous test media, comprising an optical transmitter and an associated receiver which generates for evaluation an output signal which is varied by the influence of the test medium, for implementing the method according to one or more of claims 1 to 7, characterised in that the output of the photooptical receiver (M; 14) is supplied in parallel or in succession to amplifiers (V1, V2, V3) in such a way that parallel signals which are differently graded in amplitude result from the one receiving diode output signal, the said parallel signals being supplied for serial processing.

9. A device according to claim 8, characterised in that, as well as the separate optical beam-conducting arrangements (13, 14) which hold the transmitter in the form of an LED (S) and the receiver in the form of a photo-diode (M), there is arranged in a sensor body which is closed by an oblique end plate (12) a local electronic system that contains at least one switch block (22) which is multiplexed in its chronological sequence for respective receiver diodes (M, L) present, for passing on the output signals of the receiver diodes serially to a common output line (23) for evaluation.

10. A device according to claim 8 or 9, characterised in that the switch block (22) for serially passing on receiver diode output signals comprises various output switches (S1, S2, S3, S4, S5, S6) which are controlled in chronological sequence by a selective control circuit (AS) for selectively passing on one of the measurement signals at a time to the common output line (23), the individual receiver diodes being impinged upon by higher-frequency light of the transmitter diode (S) which is acted upon by an alternating voltage (square wave voltage of 2 kHz), and a phase-synchronous rectifier (24) being connected in series with the switch block (22) to generate low frequency analogue signal pulses in chronological sequence, the said signal pulses being supplied via the common output line (23) to a measured value evaluating circuit.

11. A device according to one of claims 8 to 10, characterised in that a temperature sensor in the form of an NTC resistor (21) is further arranged in the sensitive region of the sensor body carrying the transmitting and receiver diodes, the said temperature sensor similarly being acted upon with a higher-frequency input supply voltage and its output signal being evaluated after phase-synchronous rectification together with the power and receiver diode output signals.

12. A device according to one of claims 8 to 11, characterised in that transmitting and receiver diodes (S, M) are arranged in respective cylindrical prisms (13, 14) which shape the outgoing radiation and which are flattened laterally and are placed together with their flattened sides in the region of the beam entry and exit at an angle such that a 90° angle suitable for measuring the turbidity of the scattered radiation is produced in the adjacent aqueous test medium.

13. A device according to one of claims 8 to 12, characterised in that the prisms (13, 14) carrying the receiver and transmitting diodes (M, S) are held in an end plate (12) fitted on the cylindrical sensor body (10) obliquely to the said sensor body, thereby forming transmitting and receiver prism windows.

14. A device according to claim 13, characterised in that the two transmitting and receiver prism windows (13', 14') are arranged in the lower region of the cylindrical sensor body (10) which tapers as a result of the oblique shape of the end plate, an axis set through the two prism windows running perpendicularly to the major axis of the ellipse of the oblique end plate shape in such a way that even when the sensor body is installed vertically in pipelines, the pipelines themselves form a light trap for the transmitted beam without unwanted reflections while simultaneously providing impact-protection as a result of the lower-projecting end plate edge.

## Revendications

1. Procédé utilisé en chimie analytique pour détecter des grandeurs dont la présence modifie un signal primaire, en particulier pour mesurer la turbidité de milieux aqueux, mettant en oeuvre un émetteur optique associé à un récepteur optique qui délivre, pour évaluation, un signal de sortie modifié par l'influence de milieu de mesure,
caractérisé en ce que
le signal sortant du récepteur optique (14 ; M) est soumis à divers niveaux d'amplification qui sont amenés séparément à un circuit logique d'évaluation fournissant une valeur de mesure après évaluation des niveaux du signal.

2. Procédé selon la revendication 1,
caractérisé en ce que
les signaux sortant de la même diode réceptrice (14 ; M) après application des divers niveaux d'amplification sont amenés en succession sérielle au circuit logique d'évaluation, constitué par un microprocesseur, qui effectue le contrôle de vraisemblance des divers niveaux du signal et sélectionne, à partir des signaux reçus comme indicateur de la valeur mesurée celui qui, par sa hauteur, permet la meilleure conversion numérique.

3. Procédé selon la revendication 1 ou 2,
caractérisé en ce que
les signaux de sortie de la diode réceptrice, situés à des niveaux différents, sont transmis en même temps qu'un autre signal de température et au moins un autre signal de sortie de diode, par l'intermédiaire d'un bloc de commutation (22) multiplexé dans le temps, à un conducteur commun de sortie, le bloc de commutation (22) étant commandé par un circuit de commande de sélection (AS).

4. Procédé selon une des revendications 1 à 3,
caractérisé en ce que
la diode lumineuse émettrice (13) est commandée par un signal à inversion, les signaux pulsés correspondants sortant des diodes de mesure étant convertis en une série d'impulsions de signaux analytiques à basse fréquence au cours d'un traitement ultérieur effectué par un redresseur (24) à synchronisation de phases, monté dans le conducteur commun de sortie (23).

5. Procédé selon une des revendications 1 à 4,
caractérisé en ce qu'
il comporte, près de la tête du détecteur, un détecteur de température (21) auquel est envoyé également un signal de commande à haute fréquence dont la sortie s'effectue également par l'intermédiaire du bloc de commutation (22) multiplexé, sous forme d'une séquence sérielle, avec les autres signaux de mesure, sur le conducteur de sortie commun (23.

6. Procédé selon une des revendications 1 à 5,
caractérisé en ce que
les différents niveaux d'amplification du signal de sortie de la diode réceptrice sont contrôlés, en ce qui concerne le respect des valeurs limites maximale et minimale données, par le circuit d'exploitation des valeurs mesurées, monté avec son électronique de chantier, séparément par rapport au corps du détecteur.

7. Procédé selon une des revendications 1 à 6,
caractérisé en ce qu'
au moins le signal de température, le signal de contrôle de puissance ainsi que trois signaux de sortie de la diode réceptrice ayant reçu une amplification normale, moyenne et élevée et destinés à mesurer la turbidité sont, après contrôle du dépassement des valeurs limites, soumis séparément à un second contrôle portant sur les valeurs situées en dehors des limites possibles des valeurs mesurées, le résultat de ce contrôle entraînant soit l'exécution d'un nouveau cycle de mesure, soit une annonce d'erreur.

8. Dispositif utilisé en chimie analytique pour détecter des grandeurs dont la présence modifie un signal primaire, en particulier pour mesurer la turbidité de milieux aqueux, comportant un émetteur optique associé à un récepteur optique qui délivre pour évaluation, un signal de sortie modifié par l'influence du milieu de mesure, dispositif destiné à la mise en oeuvre du procédé selon une des revendications 1 à 7,
caractérisé en ce que
la sortie du récepteur optique (M ; 14) est reliée à des amplificateurs (V₁, V₂, V₃) montés en parallèle ou en série de manière qu'un signal sortant de la diode réceptrice donne des signaux parallèles présentant des amplitudes de niveaux différents qui sont ensuite adressés à un traitement en série.

9. Dispositif selon la revendication 8,
caractérisé en ce que
à l'intérieur d'un corps de détecteur formé par une plaque d'extrémité (12) oblique, en plus des dispositifs (13, 14) optiques spécifiques conduisant le rayonnement contenant l'émetteur sous forme de LED (5) et le récepteur sous forme de photodiode (M), se trouve une électronique de chantier contenant, pour chaque diode réceptrice présente (M, L) au moins un bloc de commutation (22) multiplexé dans le temps et servant à amener en série les signaux de sortie des diodes réceptrices par un conducteur de sortie commun (23) au système d'exploitation.

10. Dispositif selon une des revendication 8 ou 9,
caractérisé en ce que
le bloc de commutation (22) servant à la conduite en série des signaux de sortie des diodes réceptrices est composé de contacteurs de sortie différents (S1, S2, S3, S4, S5, S6) qui successivement dans le temps sont commandés par un circuit de commande de sélection (AS) servant à faire passer sélectivement chacun des signaux de mesure sur le conducteur commun de sortie (23), les différentes diodes réceptrices étant actionnées par la lumière à haute fréquence de la diode émettrice (S) excitée par une tension alternative (tension rectangulaire de 2 kHz), un redresseur (24) à synchronisation de phases étant monté en aval du bloc de commutation (22) de manière à générer des impulsions de signaux analogiques à basse fréquence, se succédant dans le temps, qui sont amenés par le conducteur commun de sortie (23) à un circuit d'exploitation des valeurs mesurées.

11. Dispositif selon une des revendications 8 à 10,
caractérisé en ce que
dans la plage de sensibilité du corps de détecteur portant les diodes émettrice et réceptrice, se trouve également un détecteur de température sous la forme d'une thermistance (21) sollicitée, le cas échéant, par une tension d'alimentation haute fréquence et dont le signal de sortie, après redressement avec synchronisation de phases, est exploité avec les signaux de sortie des diodes réceptrices et les signaux de puissance.

12. Dispositif selon une des revendications 8 à 11,
caractérisé en ce que
les diodes émettrice et réceptrice (S, M) sont montées chacune dans un prisme cylindrique (13, 14) donnant sa forme au rayonnement sortant, chaque prisme présentant latéralement une face plate située dans la zone d'entrée ou de sortie du rayonnement, ces deux faces étant agencées de manière à former, à l'intérieur du milieu aqueux de mesure baignant ces faces et dont on veut mesurer la turbidité, un angle de 90° approprié au rayonnement diffusé.

13. Dispositif selon une des revendications 8 à 12,
caractérisé en ce que
les prismes (13, 14) portant les diodes (M, S) sont logés dans une plaque d'extrémité (12) montée obliquement sur le corps cylindrique (10) du détecteur, et constituent ainsi les fenêtres des prismes d'émission et de réception.

14. Dispositif selon la revendication 13,
caractérisé en ce que
les deux fenêtres (13', 14') des prismes d'émission et de réception sont situées dans la partie inférieure du corps cylindrique du détecteur (10) qui du fait de l'inclinaison de la plaque d'extrémité, va en s'amincissant, l'axe défini par les deux fenêtres des prismes étant perpendiculaire à l'axe principal de l'ellipse constituant la forme de la plaque d'extrémité, de sorte que grâce au montage vertical du corps de détecteur également à l'intérieur de conduites tubulaires, celles-ci constituent elles-mêmes un piège à lumière évitant des réflexions fâcheuses du rayonnement émis tout en assurant au bord le plus profond de la plaque d'extrémité une protection contre les chocs.
